# FASCICULE DE BREVET EUROPEEN

(11) **EP 1 313 321 B1**
(45) Date de publication et mention de la délivrance du brevet: **29.10.2008**
(21) Numéro de dépôt: 02370036.2
(22) Date de dépôt: 18.09.2002
(51) Int. Cl.: H04N 7/18, G08B 13/194, G06T 7/20, B66B 1/34

(54) **Procédé de surveillance d'une cabine d'ascenseur**
Verfahren zur Überwachung einer Aufzugkabine
Method for monitoring an elevator

(30) Priorité: 18.09.2001 FR 0112055
(43) Date de publication de la demande: 21.05.2003
(73) Titulaire: Autinor, S.A., 59710 Avelin (FR)
(72) Inventeur: Evin, Jean, 59710 Mérignies (FR); Delvosal, Bruno, 7522 Blandain (BE)
(74) Mandataire: Hennion, Jean-Claude

(56) Documents cités:
- EP-A- 0 902 402
- WO-A-01/42120
- US-A- 5 001 557
- US-A- 5 258 586
- US-A- 5 387 768

## Description

L'invention se rapporte à un procédé de surveillance d'une cabine d'ascenseur.

Elle se rapporte également aux moyens pour la mise en oeuvre du procédé.

La gestion d'un ascenseur ou d'une batterie d'ascenseurs est plus ou moins performante.

Certains systèmes sont peu performants et ne font qu'exécuter les ordres d'appel et d'envoi reçus aux étages et/ou dans la cabine et généralement sans tenir compte de l'occupation des cabines.

Lorsque le nombre d'ascenseurs augmente et que ces ascenseurs desservent de nombreux étages, d'où un temps de déplacement relativement conséquent, il est préférable d'optimiser le déplacement de chaque ascenseur.

La première solution consiste à gérer les déplacements des cabines en fonction des appels mais il s'agit là d'une solution qui mérite d'être améliorée.

En effet, ce type de gestion n'interdit pas à une cabine d'ascenseur déjà complètement occupée de s'arrêter à un étage pour prendre quelqu'un.

Ceci pose un problème qui est de connaître l'occupation de la cabine.

Il existe déjà des pèses charges mais qui sont bien plus souvent utilisés pour la sécurité.

Ces dispositifs donnent une indication mais en aucun cas ne donnent réellement le nombre d'individus.

Des tentatives pour la détermination d'une présence ont déjà été réalisées à l'aide d'une installation comportant une caméra( EP-A-902.402).

Le principe consistait à établir, pour chaque palier, une image de référence de l'intérieur de la cabine lorsque celle-ci est vide puis de comparer l'image à un instant prédéterminé avec l'image de référence du palier considéré et d'en déduire l'occupation par différence de la luminosité de l'image entre celle prise à l'instant T et celle prise en référence la cabine vide.

On a constaté que le système ne fonctionnait pas bien car l'éclairage de l'intérieur de la cabine est très variable.

En effet, il dépend également des éclairages externes lorsque les portes s'ouvrent.

Pour cette raison, on fait appel à une image de référence par palier.

On constate toutefois que cela est insuffisant car les ampoules peuvent être momentanément hors service et les résultats sont faussés.

Pour réduire ces effets, il est connu de prévoir un éclairage puissant pour minimiser les variations mais cela ne donne cependant pas les résultats escomptés.

Les parois de la cabine sont souvent réfléchissantes et souvent équipées localement de miroirs pour donner une impression de volume. Ces miroirs produisent des reflets qui perturbent l'analyse.

Un deuxième problème qui se pose, pour la gestion d'ascenseur, est celui relatif à la commande de la fermeture des portes.

En effet, lorsque la porte se ferme généralement après un temps déterminé et lorsqu'elle rencontre un obstacle, elle doit stopper son mouvement.

A ce jour, le système est basé sur des capteurs de pression, de forces, de variation de champs etc..

Il n'anticipe pas une entrée ou une sortie et fait souvent appel à des moyens mécaniques devant souvent être vérifiés.

La fermeture de la porte se fait avec un délai fixé arbitrairement qui commence à courir dès que la porte s'ouvre.

Lorsque la porte s'arrête dans son mouvement de fermeture, c'est qu'un obstacle a été physiquement détecté à proximité voire lors du contact avec la porte par les système du type capteurs de pression ou de forces.

On déplore donc un manque de performance.

On connaît des installations (US-5.001.557 ou US-5.387.768 ou US-5.258.586) où une ou plusieurs caméras examinent les déplacements sur le palier afin de retarder si nécessaire la fermeture de la porte.

Dans ces systèmes, on examine l'évolution de l'image en vue d'en extraire la variation afin de constituer un détecteur de mouvement.

Que ce mouvement soit en direction de la porte, parallèle à celui-ci ou s'éloignant de la porte, la fermeture est retardée.

Il convient donc d'admettre que cette analyse est peu pertinente car elle ne détecte pas l'obstacle.

Dans une autre solution connue (WO-01.42120), la caméra est située dans la cabine et proche de la porte en visant à l'extérieur de sorte que son champs de vision englobe une zone près de la porte plus petite que celle vue par les installations précitées.

Ici encore, l'analyse a pour but de retarder la fermeture de la porte si un mouvement est détecté dans l'image à proximité de la porte.

Les mêmes inconvénients que précédemment apparaissent.

Au delà de ces deux points, la connaissance de l'occupation de la zone située sur le palier et, dans une zone située devant la porte d'ascenseur, semble pouvoir être un élément intéressant pour gérer le trafic des ascenseurs mais a ses limites.

Les problèmes liés à la détermination de l'occupation de la cabine s'appliquent également à cette analyse car le problème d'éclairage est important.

L'interprétation des images ou des séquences d'images présente donc des difficultés réelles.

L'invention se propose de remédier aux inconvénients précités.

A cet effet, l'invention a pour objet un procédé de surveillance d'une cabine d'ascenseur tel que revendiqué par la revendication 1.

L'invention sera bien comprise à l'aide de la description ci-après faite à titre d'exemple non limitatif en regard du dessin qui représente schématiquement ;

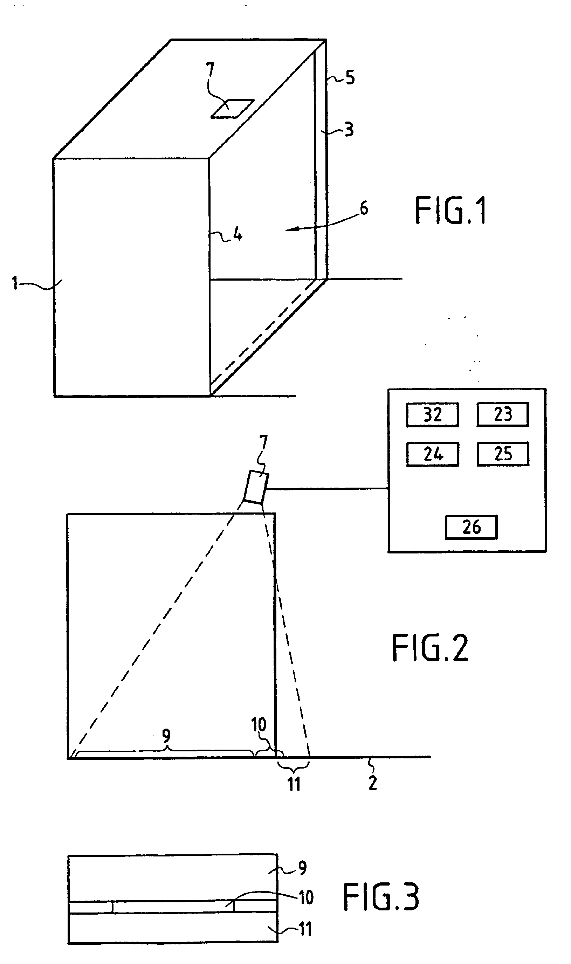

- figure 1 : une cabine d'ascenseur vue en perspective,
- figure 2 : une coupe de la cabine d'ascenseur,
- figure 3 : zones à analyser,
- figures 4 à 8 : différents résultats d'analyse de séquence d'images,
- figures 9 à 13 : différents organigrammes,

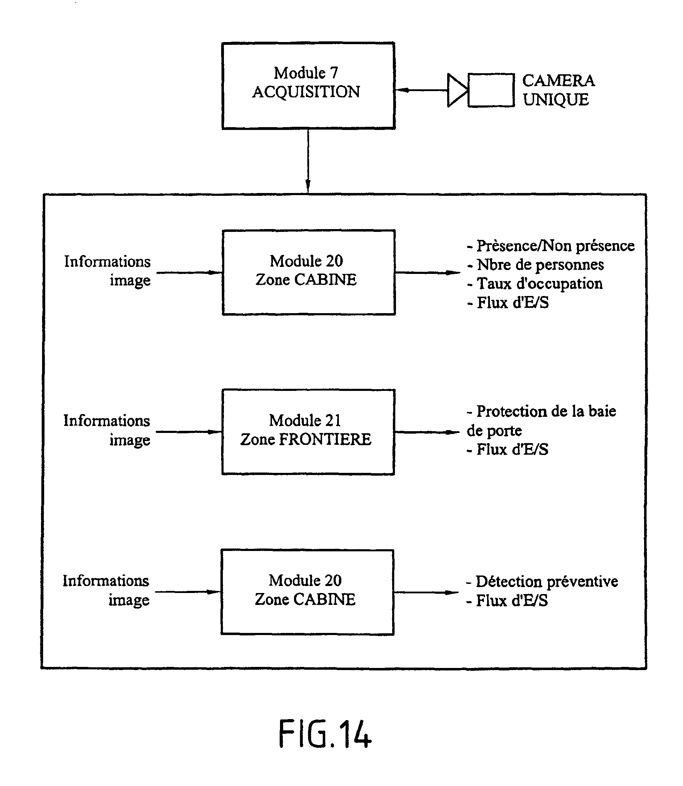

- figure 14 : les moyens de mise en oeuvre de la commande d'ascenseur.

En se reportant au dessin, on voit une cabine d'ascenseur 1 positionnée au niveau d'un palier 2.

Cette cabine d'ascenseur 1 comporte une porte 3 qui généralement s'ouvre depuis l'un 4 des bords (4,5) de l'ouverture 6.

Classiquement, pour la gestion du fonctionnement de l'ascenseur, il est mis en oeuvre un procédé de commande utilisant :
- d'une part, un capteur d'images 7, tel une caméra 7, pour acquérir au moins une image d'au moins une zone située au niveau de la porte 3 d'entrée de l'ascenseur et
- d'autre part, de moyens 8 d'analyse de l'image précitée.
   Après avoir positionné la caméra en sorte d'obtenir des images (I₁,I₂) consécutives,
- au moins périodiquement, on sélectionne une séquence d'au moins deux images (N,...,N+x),
- on délimite dans chaque image au moins une zone particulière parmi les zones correspondants à l'emplacement 10 de la porte ou à l'intérieur 9 de la cabine et, éventuellement, une zone 11 qui, située sur le palier devant la porte de la cabine, est d'étendue très limitée,
- par comparaison d'une image par rapport à l'autre, pour la zone considérée, on extrait l'évolution dans le temps de la scène dynamique que représentent les images (N,...,N+x) de la séquence précitée pour, de cette variation dans le temps, déterminer au moins l'un des paramètres que sont : le taux d'occupation de la cabine, la détection d'un obstacle à la fermeture de la porte et le flux.

En définissant dans l'image globale des zones très particulières, on peut appliquer pour chaque zone une analyse pertinente en fonction du besoin et en limitant, par ailleurs, les effets parasites induits par l'environnement.

En effet, on ne doit retarder la fermeture de la porte que si un obstacle apparaît au niveau de cette porte car, en premier lieu, il importe peu que des gens soient dans la cabine ou sur le palier car ils n'ont pas nécessairement envie de sortir ou d'entrer.

On voit notamment en figure deux que la caméra est orientée vers l'intérieur de la cabine de sorte que ce qui se passe à l'extérieur est peu important et ne vient pas perturber la mesure.

Le but principal n'est pas de détecter des mouvements mais une présence au niveau de ces zones.

Pour le contrôle d'un obstacle placé sur la zone 10 frontière, lorsqu'il sera nécessaire de fermer la porte :
- préalablement à ce contrôle, on a donc défini au moins une zone 11 dite frontière située à l'emplacement de la porte d'entrée,
- lors de l'ouverture de cette porte, on construit progressivement une première image dite de référence de cette zone dite frontière que l'on actualise progressivement et
- pour le contrôle effectif, on surveille l'évolution de l'image de la zone frontière que l'on compare avec l'image de référence construite lors de l'ouverture précitée de cette zone frontière et, lors de la fermeture, si l'image de la zone frontière présente des parties encore occupées, cela signifie que la porte ne peut être fermée.

Par contre, si la zone frontière est libre, on peut commander la fermeture.

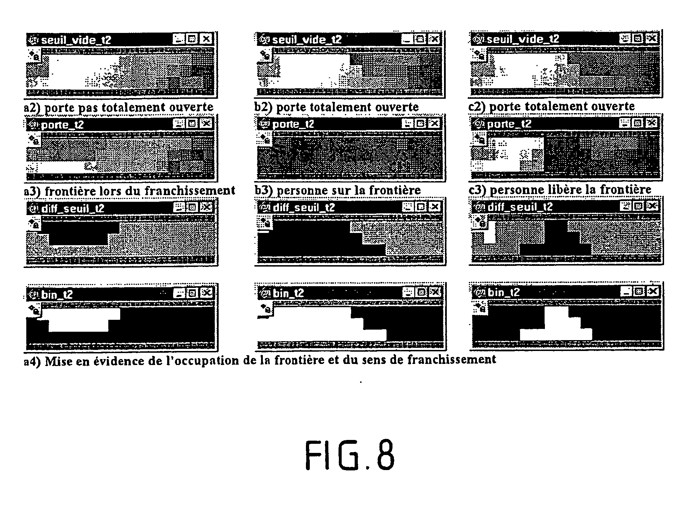

Ainsi, lorsque l'on ouvre la porte et que l'on construit l'image de référence de la zone frontière au fur et à mesure que le nez de porte se déplace (figure 8), on est certain que la partie mise en mémoire acquise placée dans l'image de référence est vide et n'est pas donc encore envahie par un individu qui sort ou entre même s'il existe déjà un franchissement de la zone libérée éloignée du nez de porte.

Par ailleurs même si l'image dite de référence est en construction, la partie de l'image déjà construite peut faire l'objet d'une analyse dynamique.

Depuis le commencement de l'ouverture de la porte, on peut suivre l'occupation réelle de cette zone.

Bien que le terme référence soit utilisé, cette image de référence construite est définie à chaque ouverture de sorte qu'elle coïncide toujours avec l'environnement changeant : il s'agit donc d'une analyse dynamique qui coïncidera toujours avec l'environnement à l'instant de la mesure.

On peut ensuite faire, notamment pour la fermeture de la porte, une analyse de l'évolution de ces pixels au cours du temps pour déterminer l'occupation de la zone frontière et le sens du flux.

On voit également le passage de la zone frontière par un individu situé dans la cabine ou hors de la cabine.

En effet, en se déplaçant vers la zone 10 frontière, on peut voir que les taches à partir desquelles on peut définir un contour, c'est à dire les zones envahies et libérées, vont franchir cette zone frontière.

Le principe de la détection se base sur le fait qu'un individu ne reste pas totalement immobile et en surveillant donc l'évolution dynamique de l'image, on va faire apparaître les variations de l'image.

On détecte certes un mouvement mais, en analysant la taille de la tache, on pourra éliminer les simples mouvements de bras, par exemple.

Il paraît utile de connaître la présence de gens dans la cabine et d'analyser leurs déplacements pour, éventuellement, utiliser ces déplacements en corrélation avec le franchissement du pas de la porte.

En effet, si l'on remarque que des individus franchissent le pas de la porte et d'autres continuent à se déplacer vers la porte, on peut alors retarder la fermeture de cette porte ; par contre, si ces individus s'éloignent, la commande de fermeture peut être activée dès que la zone frontière est vidée.

En outre, il paraît avantageux, à l'aide d'un matériel déjà mis en place pour le contrôle de la porte, de connaître la présence d'individus ou le taux d'occupation.

Pour obtenir une indication de présence dans la cabine, on analyse donc les mouvements dans la cabine.

Plus précisément, avec un algorithme dit de différence, on analyse l'évolution des images de la séquence et à cet effet :
- on extrait l'information par comparaison des couples d'images successives (N et N+1) puis (N+1 avec N+2) etc ..., pour former une image résultante codée sur trois niveaux de gris avec l'un des niveaux correspondant au fond de l'image, le deuxième niveau correspondant aux zones progressivement libérées par le déplacement des individus et le troisième niveau correspondant aux zones progressivement envahies,
- à partir du cumul des zones envahies et/ou libérées, on sépare chaque objet et
- on en détermine le nombre et leurs caractéristiques par exemple, surface, forme, etc...

Ainsi lorsque l'on compare deux images successives, on peut en extraire les variations qui résultent notamment du déplacement d'un individu.

Lorsqu'il s'agit d'un individu, ces variations sont cohérentes alors que s'il s'agit d'un artéfact, ces variations ne se reproduisent pas logiquement d'une image sur l'autre.

Un seuillage de l'image contribue également à supprimer les artéfacts et à supprimer les variations faibles.

La méthode calcule de manière automatique les caractéristiques de l'image différente (image (N + 1) ― image (N)).

Le cumul des variations va ainsi faire apparaître autour de l'individu, une enveloppe cohérente constituée par les zones envahies et les zones libérées.

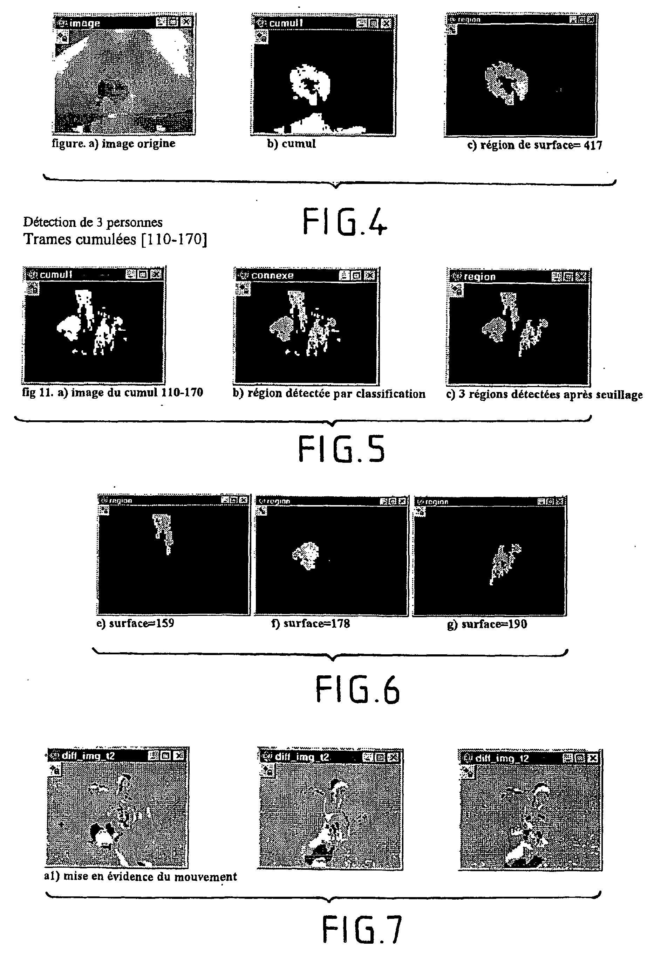

En figure 4 on a représenté une séquence montrant la détection d'une personne. A gauche, est représentée l'image d'origine, au centre, l'image cumulée puis la détermination de la surface d'une région ou d'une tache correspondant à un individu.

En figure 5, on a représenté la détection dans la cabine pour trois individus. A gauche, il s'agit de l'image cumulée, au centre les régions détectées par classification et à droite, après avoir effectué un seuillage.

En figure 6, on a isolé dans chaque image les différents individus figurant sur la figure précédente.

Suivant l'étendue de la plage de sensibilité lumineuse et du codage informatique choisi, par exemple sur 256 niveaux de gris, on définira pour le fond de l'image une valeur, pour les zones envahies une seconde valeur et pour les zones libérées une troisième valeur.

Les trois valeurs peuvent être visualisées sous forme de trois couleurs.

On notera que le déplacement d'un individu permet la reconstruction de l'objet par analyse de ces zones envahies et libérées définissant son contour.

Une analyse de l'évolution dans le temps et dans l'espace de ces zones donne également le sens de progression de l'objet dans l'espace ou encore le vecteur de déplacement.

Du fait que l'on peut analyser les zones envahies et libérées, le vecteur de déplacement est plus précis même pour des petits déplacements.

Dans le sens de l'avance, on va ainsi voir une zone envahie qui augmente et qui change de « couleur » et à l'arrière une zone libérée également qui augmente et qui change de « couleur » (figure 7).

En effet, on doit voir que les zones envahies ou libérées progressent dans l'image dans une direction donnée.

On sépare les objets détectés afin de définir leurs caractéristiques et les étiqueter.

Par une méthode mathématique, on peut en extraire la surface, la forme et le centre de gravité de la zone détectée.

Pour chaque objet, il existe une cohérence de l'enveloppe lors du déplacement ce que l'on ne retrouve pas lorsqu'il s'agit d'un artéfact de lumière.

Le nombre d'images nécessaires influe sur la qualité du résultat et le temps de traitement.

Par exemple, une séquence de cinquante images en deux secondes suffit pour obtenir une analyse correcte.

Une image est constituée généralement de deux trames et l'utilisation des trames paires ou des trames impaires permet de limiter les calculs mais également d'éliminer les fluctuations incohérentes tel le bruit de l'image comme celui provoqué par le battement des tubes fluorescents.

L'analyse en dynamique permet de s'affranchir des problèmes d'éclairage car la variation de luminance est alors quasi nulle entre deux images.

Un échantillonnage de l'image permet de réduire la taille mémoire et le nombre de calculs à effectuer et cela sans affecter les résultats.

Avec une image de 96*72 pixels, on obtient des résultats suffisants pour estimer notamment les déplacements.

L'analyse du flux entrée/sortie est basée sur deux types d'informations.

La première information est celle du taux d'occupation de la cabine donc le nombre d'individus identifiés et la deuxième information se fait à partir de l'analyse de la zone frontière.

Toujours, par la comparaison progressive des images, on peut détecter l'envahissement de la zone frontière et le sens de cet envahissement (entrée ou sortie).

La zone 10 frontière doit avoir une largeur minimale pour appréhender le sens du déplacement.

Le système permet également de surveiller si un individu est inanimé dans la cabine ou si un objet est resté dans la cabine.

En effet, lors de la scrutation des images, le système va détecter, par la différence de lumière, un objet immobile sans déplacement.

Dans cette situation, on va pouvoir comparer l'image instantanée avec cette fois-ci une image de référence de la cabine vide prise préalablement à la mise en oeuvre de l'installation pour ensuite si nécessaire déclencher une action.

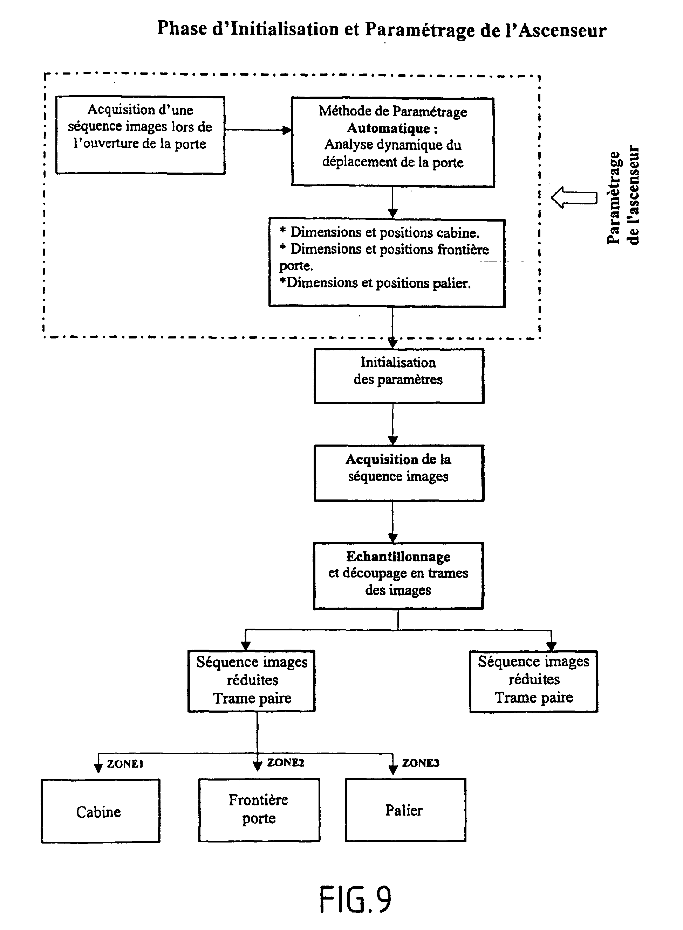

Comme on peut le voir, en figure 9, on a représenté l'organigramme de la saisie de l'environnement du dispositif.

On commence par un paramétrage de l'ascenseur et une phase d'initialisation pour ensuite passer à la phase d'acquisition.

De cette phase, on peut isoler les zones 9, 10, 11 à analyser qui correspondent à l'intérieur de la cabine, la zone frontière (l'emplacement de la porte) et le palier situé devant la porte de la cabine.

La taille du palier sera, de préférence, limitée à une zone de l'ordre de cinq centimètres de profondeur mais la taille dépendra de l'information que l'on souhaite extraire.

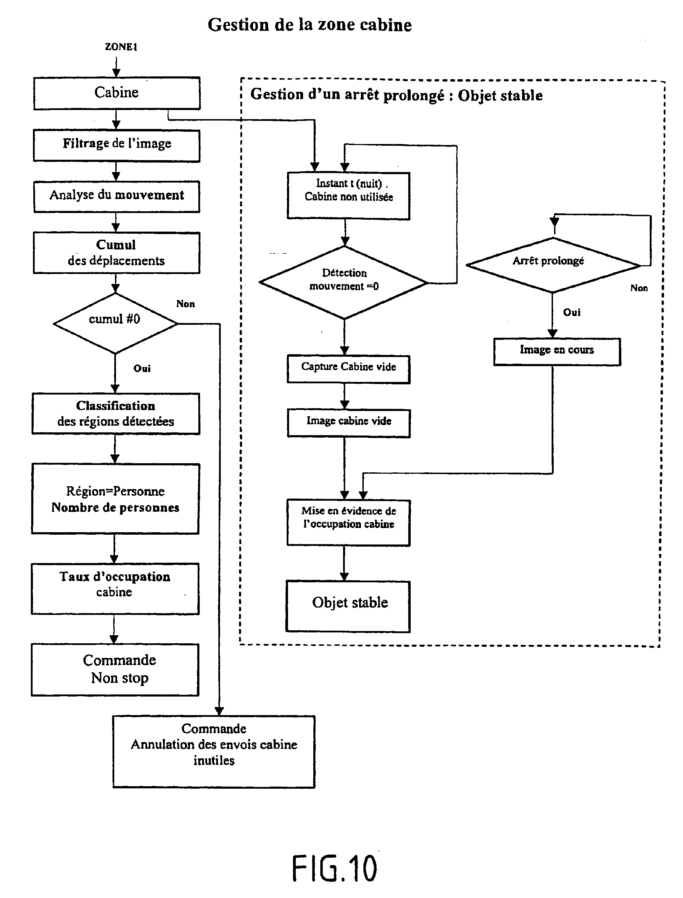

En figure 10, on explique l'algorithme de gestion de la zone cabine.

On filtre l'image c'est à dire on réalise un seuillage. On va ensuite analyser le mouvement, c'est à dire les pixels qui, entre deux images, ont évolués pour ensuite constituer une image cumulée.

De cette image cumulée, on procède par une classification pour ensuite déterminer le nombre d'individus dans la cabine et donc le taux d'occupation.

Par la taille des taches, on peut éliminer certains contrefaits.

Lors d'un arrêt prolongé de la cabine, on déclenche un test pour vérifier si personne, accidentellement, n'occupe la cabine, par exemple, une personne inanimée.

Pour cela, on prend une image de la cabine que l'on compare avec une image de référence de la cabine vide, ceci afin de vérifier la présence ou non d'un individu ou d'un objet.

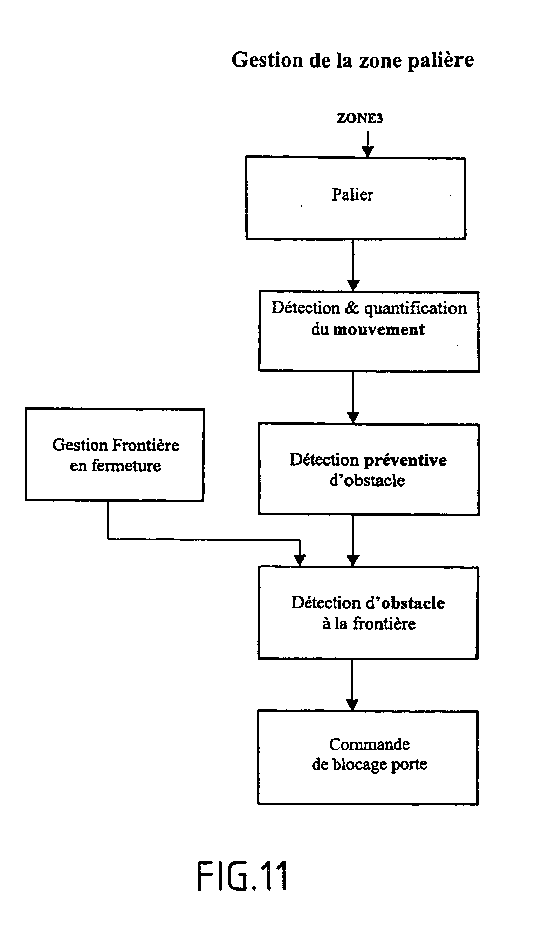

En figure 11, on a représenté l'organigramme pour la gestion de l'ascenseur tenant compte de la situation au niveau du palier.

Comme pour la cabine, on détecte et quantifie le mouvement au niveau du palier. On peut aussi détecter qu'un individu s'approche de la zone frontière (porte).

En utilisant les informations de la zone frontière (occupation ou non) et le déplacement des objets identifiés dans la cabine, on peut gérer préventivement la fermeture de la porte.

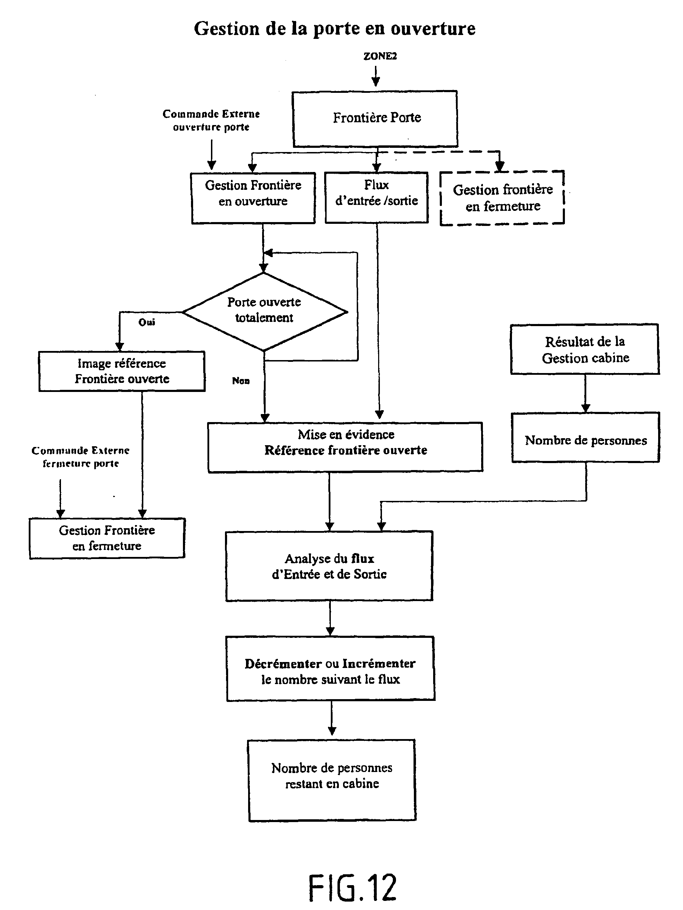

En figure 12, on a représenté l'organigramme de la gestion de la porte au moment de l'ouverture ; lors de l'ouverture de la porte, on a déjà vu que l'on construisait une image de référence progressivement lors du déplacement du nez de la porte.

Ceci permet de déterminer le flux d'entrée/sortie. En effet, lorsque l'on construit progressivement l'image frontière, les pixels en cours d'acquisition correspondent à une zone non occupée et vide.

Pendant cette construction, les pixels déjà enregistrés évoluent selon qu'il y ait ou non franchissement et peuvent alors montrer un franchissement de la zone frontière.

En fonction du flux entrée/sortie, on détermine alors le nombre d'individus dans la cabine.

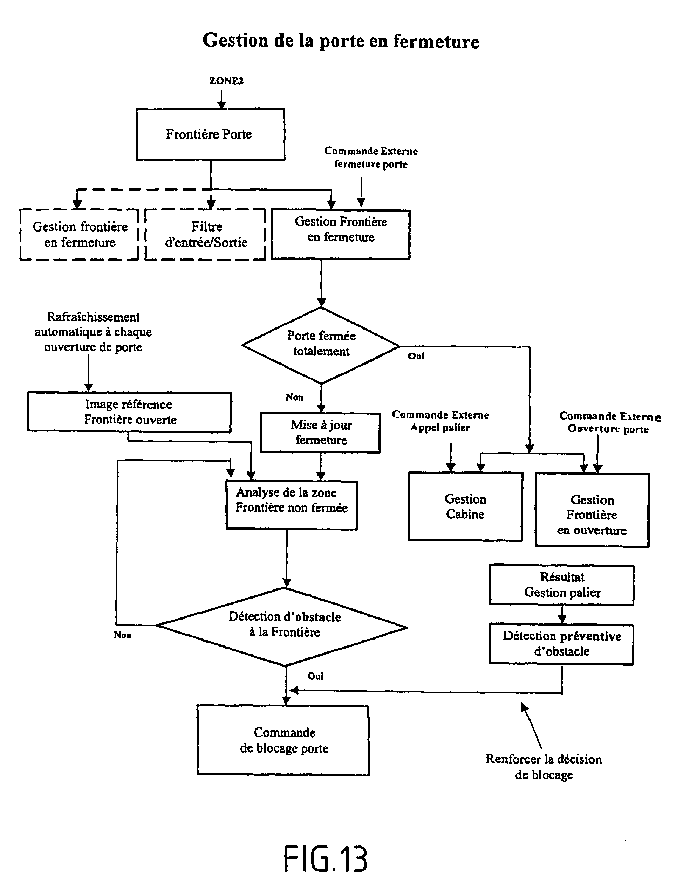

En figure 13, on a représenté la gestion de la porte en fermeture.

On va donc vérifier s'il n'y a pas d'obstacle, au niveau de la zone frontière et s'il n'y a pas d'objet qui, sur le palier, se dirigent vers la porte. Dans l'hypothèse d'un obstacle ou d'un objet se dirigeant vers la porte, on bloque le déplacement de la dite porte.

Pour la mise en oeuvre du procédé, les moyens comprennent :
- une caméra 7 pour la prise de vue,
- un module d'acquisition de l'image par la caméra couvrant les zones 9, 10, 11 à surveiller,
- de préférence, un module d'analyse correspondant à chaque zone à surveiller soit :
   . un module 20 zone cabine
   . un module 21 zone frontière
   . un module 22 zone palier
   avec leur fonction respective détaillée en figures 10 à 12.

Ces moyens comprennent des moyens pour délimiter dans l'image brute la ou les zones à analyser.

Ces modules ou l'installation comprennent en outre :
- des moyens 32 pour cumuler l'information résultant des variations d'images,
- des moyens 23 de filtrage,
- des moyens 24 d'échantillonnage,
- des moyens 25 de classification des objets détectés de l'image,
- des moyens 26 pour analyser le sens du déplacement des objets.

## Revendications

1. Procédé de surveillance d'une cabine d'ascenseur utilisant d'une part un capteur damages (7), tel qu'une caméra, pour acquérir au moins une image d'au moins une zone située au niveau de la porte (3) d'entrée de l'ascenseur et d'autre part des moyens (8) d'analyse de l'image précitée,
**caractérisé en ce que** :
a) lors de chaque ouverture de la porte (3), on construit progressivement **au fur et à mesure que le nez de la porte se déplace** une image dite de référence qui est l'image de la zone située à l'emplacement (10) de la porte, dite zone frontière (10), vide de toute présence, et
b) pour autoriser ou non la fermeture de la porte (3), au moins périodiquement,
- on sélectionne une séquence d'au moins deux images (N, ... Nx) dans lesquelles on délimite au moins ladite zone frontière (10), la première image étant l'image de référence,
- et, par comparaison d'une image donnée de la séquence par rapport à l'image de référence, on extrait l'évolution dans le temps de la scène dynamique que représentent les images de la séquence précitée pour, de cette variation, déterminer le paramètre consistant dans la détection d'un obstacle à la fermeture de la porte.

2. Procédé selon la revendication 1 **caractérisé en ce que** :
- on sélectionne une séquence d'au moins deux images (N, ... Nx) dans lesquelles on délimite une zone dite cabine (9), correspondant à l'intérieur (9) de la cabine
- et, par comparaison des images de la séquence pour ladite zone cabine (9), on extrait l'évolution dans le temps de la scène dynamique que représentent les images de la séquence précitée pour, de cette variation dans le temps, déterminer le paramètre consistant dans le taux d'occupation de la cabine.

3. Procédé selon la revendication 2 **caractérisé en ce que**, par comparaison entre elles des images de la séquence pour la zone frontière (10) autres que l'image de référence, on extrait l'évolution dans le temps de la scène dynamique que représentent les images de la séquence précitée pour, de cette variation dans le temps, la détermination du paramètre consistant dans le flux entrée/sortie.

4. Procédé selon l'une des revendication 2 ou 3 **caractérisée en ce que** :
- on sélectionne une image de référence de ladite zone cabine (9) qui est l'image de ladite zone vide de toute présence et,
- et, par comparaison d'une image de la séquence pour ladite zone cabine (9) avec ladite image de référence, on extrait l'évolution dans le temps de la scène dynamique que représentent lesdites images pour, de cette variation dans le temps, déterminer le paramètre consistant dans la présence dans la cabine.

5. Procédé selon l'une des revendications 1 à 4 **caractérisé en ce que** :
- on sélectionne une séquence d'au moins deux images (N, ... Nx) dans lesquelles on délimite une zone dite palière (11), située devant la porte,
- et, par comparaison des images de la séquence pour ladite zone palière (11), on extrait l'évolution dans le temps de la scène dynamique que représentent les images de la séquence précitée pour, de cette variation dans le temps, la détermination du paramètre consistant dans le flux entrée/sortie.

6. Procédé selon la revendication 5 **caractérisé en ce que** la zone palière (11), située sur le palier devant la porte, est d'étendue très limitée, notamment **sensiblement égale à** cinq centimètres.

7. Procédé selon l'une des revendications 1 à 6 **caractérisé en ce que** :
- on extrait l'information par comparaison des couples d'images successives (N et N+1) puis (N+1 avec N+2) etc ..., pour former une image résultante codée sur trois niveaux de gris avec l'un des niveaux correspondant au fond de image, le deuxième niveau correspondant aux zones progressivement libérées par le déplacement des individus et le troisième niveau correspondant aux zones progressivement envahies, et
- à partir du cumul des zones envahies et/ou libérées, on sépare chaque objet.

8. Procédé selon l'une des revendications 1 à 7 **caractérisé en ce qu'**on effectue un échantillonnage et un découpage en trame des images pour obtenir une séquence réduite.

9. Procédé selon l'une des revendications 1 à 7 **caractérisé en ce qu'**on filtre l'image.

## Claims

1. A method for monitoring a passenger lift using on one hand an image sensor (7), such as a camera, to acquire at least one image of at least one zone located at the level of the entry door (3) of the lift and on the other hand means (8) for analysing the said image,
**characterised in that**:
a) each time the door (3) is opened, and as the tip of the door moves, a so-called reference image is progressively constructed which is the image of the zone situated at the placement (10) of the door, the so-called front zone (10), devoid of any presence, and
b) to enable or not closing of the door (3), at least periodically,
a sequence of at least two images (N, Nx) is selected in which at least said front zone (10) is delimited, the first image being the reference image,
and, by comparison of a given image of the sequence relative to the reference image, the timed evolution of the dynamic scene represented by the images of the above sequence is extracted to determine from this variation the parameter consisting in the detection of an obstacle to door closing.

2. The method according to claim 1, **characterised in that**:
a sequence of at least two images (N, Nx) is selected in which a so-called cabin zone (9) is delimited, corresponding to the inside (9) of the cabin
and, by comparison of the images of the sequence for said cabin zone (9) the timed evolution of the dynamic scene represented by the images of the above sequence is extracted to determine from this variation the parameter consisting of the occupation rate of the cabin.

3. The method according to claim 2, **characterised in that**, by comparison of the images of the sequence for the front zone (10) other than the reference image, the timed evolution of the dynamic scene represented by the images of the above sequence is extracted to determine from this timed variation the parameter consisting of the entry/exit flow.

4. The method according to any one of claims 2 or 3, **characterised in that**:
a reference image of said cabin zone (9) is selected which is the image of said zone devoid of any presence and,
by comparison of an image of the sequence for said cabin zone (9) with said reference image the timed evolution of the dynamic scene represented by the images of the above sequence is extracted to determine from this timed variation the parameter consisting of the presence in the cabin.

5. The method according to any one of claims 1 to 4, **characterised in that**:
a sequence of at least two images (N, Nx) is selected in which a so-called landing zone (11) is delimited, situated in front of the door,
and, by comparison of the images of the sequence for said landing zone (11), the timed evolution of the dynamic scene represented by the images of the above sequence is extracted to determine from this timed variation the parameter consisting of the entry/exit flow.

6. The method according to claim 5, **characterised in that** the landing zone (11), situated on the landing in front of the door, has a very limited reach, especially substantially equal to five centimetres.

7. The method according to any one of claims 1 to 6, **characterised in that**:
information is extracted by comparison of the successive couples of images (N and N+1) then (N+1 with N+2) etc ..., to form a resulting image coded on three levels of grey with one of the levels corresponding to the base of the image, the second level corresponding to the zones progressively freed by displacement of the individuals and the third level corresponding to the progressively invaded zones, and
each object is separated from the accumulation of the invaded and/or freed zones.

8. The method according to any one of claims 1 to 7, **characterised in that** sampling and grid cutting of the images is performed to obtain a reduced sequence.

9. The method according to any one of claims 1 to 7, **characterised in that** the image is filtered.

## Patentansprüche

1. Verfahren zur Überwachung einer Aufzugkabine, das einerseits einen Bildgeber (7), wie beispielsweise eine Kamera, zur Erfassung wenigstens eines Bildes von wenigstens einer im Bereich der Eingangstür (3) des Aufzugs befindlichen Zone und andererseits Mittel (8) zum Analysieren des vorgenannten Bildes verwendet,
**dadurch gekennzeichnet, daß**:
a) bei jedem Öffnen der Tür (3) fortschreitend im Zuge der Verschiebung der Kante der Tür ein sogenanntes Referenzbild erstellt wird, welches das Bild der Zone ist, die sich an der Stelle (10) der Tür befindet, Grenzzone (10) genannt, und in der niemand anwesend ist, und
b) für das Gestatten des Schließens der Tür (3) zumindest periodisch
- eine Folge von mindestens zwei Bildern (N, ..., Nx) ausgewählt wird, in denen wenigstens die Grenzzone (10) eingegrenzt wird, wobei das erste Bild das Referenzbild ist,
- und durch Vergleichen eines gegebenen Bildes der Folge mit dem Referenzbild die zeitliche Entwicklung der dynamischen Szene, die die Bilder der vorgenannten Frequenz aufweisen, entnommen wird, um aus dieser Veränderung den Parameter zu bestimmen, der in der Erfassung eines Hindernisses für das Schließen der Tür besteht.

2. Verfahren nach Anspruch 1, **dadurch gekennzeichnet, daß**:
- eine Folge von mindestens zwei Bildern (N, ..., Nx) ausgewählt wird, in denen eine sogenannte Kabinenzone (9) eingegrenzt wird, die dem Innenraum (9) der Kabine entspricht,
- und durch Vergleichen der Bilder der Folge für die Kabinenzone (9) die zeitliche Entwicklung der dynamischen Szene, die die Bilder der vorgenannten Frequenz aufweisen, entnommen wird, um den Parameter zu bestimmen, der in der Belegungsrate der Kabine besteht.

3. Verfahren nach Anspruch 2, **dadurch gekennzeichnet, daß** durch Vergleichen der anderen Bilder der Folge für die Grenzzone (10) als der Referenzbilder die zeitliche Entwicklung der dynamischen Szene, die die Bilder der vorgenannten Frequenz aufweisen, entnommen wird, um aus dieser zeitlichen Veränderung den Parameter zu bestimmen, der im Eingangs-/Ausgangsstrom besteht.

4. Verfahren nach einem der Ansprüche 2 oder 3, **dadurch gekennzeichnet, daß**:
- ein Referenzbild der Kabinenzone (9) ausgewählt wird, das das Bild der Zone ist, wenn niemand anwesend ist, und
- durch Vergleichen eines Bildes der Folge für die Kabinenzone (9) mit dem Referenzbild die zeitliche Entwicklung der dynamischen Szene, die die Bilder aufweisen, entnommen wird, um aus dieser Veränderung den Parameter zu bestimmen, der in der Anwesenheit in der Kabine besteht.

5. Verfahren nach einem der Ansprüche 1 bis 4, **dadurch gekennzeichnet, daß**:
- eine Folge von mindestens zwei Bildern (N, ..., Nx) ausgewählt wird, in denen eine sogenannte Antrittszone (11) eingegrenzt wird, die sich vor der Tür befindet,
- und durch Vergleichen der Bilder der Folge für die Antrittszone (11) die zeitliche Entwicklung der dynamischen Szene, die die Bilder der vorgenannten Frequenz aufweisen, entnommen wird, um aus dieser zeitlichen Veränderung den Parameter zu bestimmen, der im Eingangs-/Ausgangsstrom besteht.

6. Verfahren nach Anspruch 5, **dadurch gekennzeichnet, daß** die Antrittszone (11), die sich auf der Antrittsstufe vor der Tür befindet, von sehr begrenztem Ausmaß, insbesondere gleich fünf Zentimetern, ist.

7. Verfahren nach einem der Ansprüche 1 bis 6, **dadurch gekennzeichnet, daß**:
- die Information durch Vergleichen der Paare von aufeinander folgenden Bildern (N und N+1), dann (N+1 mit N+2), usw. entnommen wird, um ein auf drei Graustufen codiertes resultierendes Bild zu erhalten, wobei eine der Stufen dem Hintergrund des Bildes entspricht, die zweite Stufe den fortschreitend durch die Bewegung der Personen freigegebenen Zonen entspricht, und die dritte Stufe den fortschreitend eingenommenen Zonen entspricht, und
- aus der Kumulation der eingenommenen und/oder freigegebenen Zonen jedes Objekt separiert wird.

8. Verfahren nach einem der Ansprüche 1 bis 7, **dadurch gekennzeichnet, daß** eine Bemusterung und Rastereinteilung der Bilder durchgeführt wird, um eine reduzierte Folge zu erhalten.

9. Verfahren nach einem der Ansprüche 1 bis 7, **dadurch gekennzeichnet, daß** das Bild gefiltert wird.
